# FASCICULE DE BREVET EUROPEEN

(11) **EP 2 759 441 B1**
(45) Date de publication et mention de la délivrance du brevet: **12.08.2015**
(21) Numéro de dépôt: 14151858.9
(22) Date de dépôt: 21.01.2014
(51) Int. Cl.: B60M 1/28, B60M 1/24

(54) **Dispositif de détection d'usure d'un fil de contact d'une caténaire**
Vorrichtung zum Entdecken des Verschleißes eines Fahrdrahts einer Oberleitung
Device for detecting the wear of a contact wire of an overhead line

(30) Priorité: 29.01.2013 FR 1300182
(43) Date de publication de la demande: 30.07.2014
(73) Titulaire: SNCF Reseau, 75013 Paris (FR); 4 NRJ SARL, 41000 Blois (FR)
(72) Inventeur: Gasselin, Benoît, 41330 FOSSE (FR); Malve, Luc, 37510 BALLAN-MIRE (FR); Poligne, Christian, 77181 LE PIN (FR); Goulain, Laurent, 76240 BELBEUF (FR); Nicolini, Jean-Pierre, 78500 SARTROUVILLE (FR); Millot, Gérard, 91700 ST GENEVIEVE DES BOIS (FR)
(74) Mandataire: Argyma

(56) Documents cités:
- EP-A1- 2 071 277
- WO-A1-02/21076

## Description

### DOMAINE TECHNIQUE GENERAL ET ART ANTERIEUR

La présente invention concerne le domaine des installations ferroviaires et, plus particulièrement, celui des équipements pour l'alimentation en courant électrique des locomotrices des trains circulant sur une voie ferrée.

Dans le but de transmettre du courant électrique aux trains circulant sur une voie ferrée, au moins un câble conducteur ou fil de contact est disposé au-dessus de la voie ferrée. Il alimente en courant des pantographes qui sont situés sur la partie supérieure de la locomotrice. Un pantographe est un dispositif qui permet à une locomotrice électrique de capter le courant par frottement sur le fil de contact.

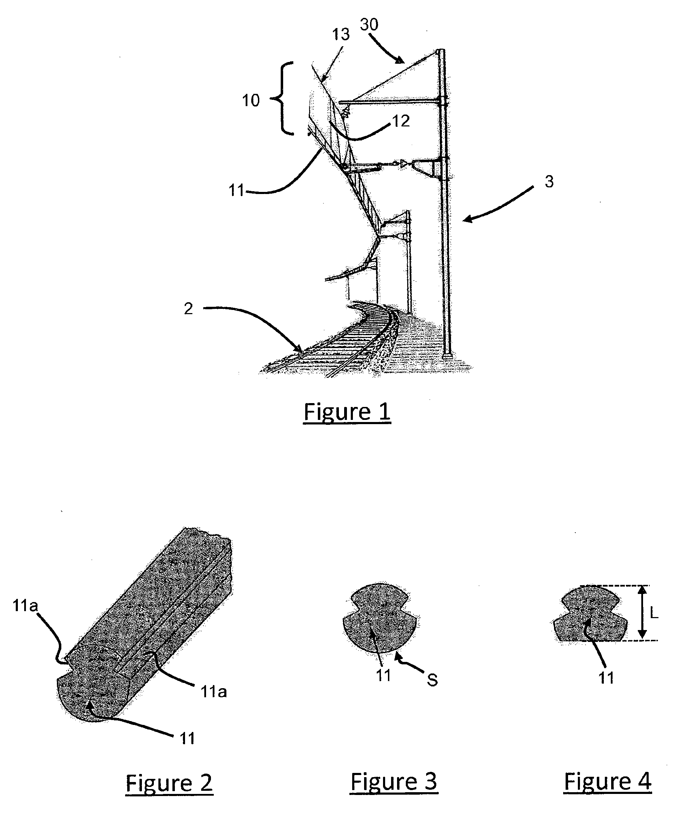

De manière classique, en référence à la figure 1, un ou plusieurs fils de contact 11 sont suspendus à un câble porteur 13 par l'intermédiaire d'une succession de câbles verticaux 12, dénommés pendules, dont les longueurs sont adaptées pour maintenir le fil de contact 11 sensiblement horizontal. L'ensemble formé par le fil de contact 11, les pendules 12 et le câble porteur 13 est classiquement désigné caténaire 10 (ou Ligne Aérienne de Contact). Il va de soi que la caténaire 10 pourrait comprendre en outre un câble porteur auxiliaire relié, d'une part, au fil de contact 11 et relié, d'autre part, à l'extrémité inférieure des pendules 12.

De manière connue, toujours en référence à la figure 1, la caténaire 10 est supportée au-dessus de la voie ferrée 2 par des poteaux de support 3 disposés, de loin en loin le long de la voie ferrée 2. Ils comportent, chacun, un système de maintien 30 du fil de contact 11 et du câble porteur 13 comprenant un hauban et une console, placés en porte à faux par rapport au poteau de support 3 et disposés de façon à former un triangle dans un plan vertical au niveau de la partie supérieure du poteau 3. Un tel agencement est décrit dans le document EP 2 071 277.

En référence aux figures 2 et 3, un fil de contact 11 se présente sous la forme d'un élément longitudinal comportant, de préférence, deux rainures latérales et longitudinales de fixation 11a pour permettre, en particulier, la liaison du fil de contact 11 avec les pendules 12 de la caténaire 10 ou un câble porteur auxiliaire.

A l'état neuf, la face inférieure du fil de contact 11 est arrondie comme illustré à la figure 3. Lorsqu'un train circule sur la voie ferrée, le pantographe frotte sur la face inférieure S du fil de contact 11 ce qui conduit à son usure. En référence à la figure 4, à l'état usé, un méplat se forme sur la face inférieure du fil de contact 11 ce qui diminue son épaisseur.

Lorsqu'un fil de contact est usé, celui-ci peut rompre et ainsi entraîner des dégâts importants sur la caténaire. De manière classique, on définit une limite d'usure L pour un fil de contact 11 qui correspond à une épaisseur minimale du fil de contact 11 avant son remplacement. Afin de limiter le risque de rupture, il est nécessaire de surveiller l'état d'usure du fil de contact 11, c'est-à-dire son épaisseur, pour en détecter les points faibles pouvant entraîner une rupture.

En général, la surveillance de l'usure d'un fil de contact 11 est réalisée de manière automatique au moyen d'engins qui parcourent périodiquement le réseau ferroviaire pour mesurer l'épaisseur du fil de contact 11. Une telle surveillance automatique permet de détecter de manière rapide et pratique tout défaut d'usure. Néanmoins, une surveillance automatique ne peut pas être mise en oeuvre sur l'ensemble du réseau ferroviaire, par exemple, au niveau des zones de jonction de deux fils de contact 11 présentes environ tous les 1200 m sur une voie ferrée ou dans les zones denses (grandes gares, etc.). De plus, lorsqu'un fil de contact 11 est recouvert de graisse, la surveillance de son usure de manière automatique est peu fiable. Aussi, il est nécessaire de mettre en oeuvre en parallèle une surveillance manuelle de l'usure des fils de contact 11 dans les zones concernées.

Contrairement à une surveillance automatique, une surveillance manuelle de l'usure des fils de contact 11 requiert de bloquer la circulation ferroviaire, de mettre hors tension les installations ferroviaires et de monopoliser de nombreux moyens humains (intervention de plusieurs agents) et matériels (utilisation d'une plateforme élévatrice). Une surveillance manuelle présente de nombreux inconvénients en termes de coûts financiers, de temps et de sécurité.

### PRESENTATION GENERALE DE L'INVENTION

Pour éliminer au moins certains de ces inconvénients, l'invention concerne un dispositif de détection d'usure d'un fil de contact d'une caténaire disposée au-dessus d'une voie ferrée, le fil de contact étant adapté pour entrer en contact avec un pantographe d'un véhicule ferroviaire circulant sur ladite voie ferrée, le dispositif de détection comprenant un support de fixation adapté pour être relié solidairement au fil de contact et des moyens élastiques reliés au support de fixation sous tension élastique, les moyens élastiques comprenant une portion fusible configurée pour se rompre en cas d'usure du fil de contact, les moyens élastiques étant configurés pour se déformer du fait de la tension élastique lors de la rupture de la portion fusible.

Grâce au dispositif selon l'invention, il est possible de surveiller l'usure d'un fil de contact de manière rapide et non contraignante. En effet, le support de fixation peut avantageusement être fixé sur le fil de contact alors que celui-ci est alimenté électriquement ce qui procure un gain de temps et une économie financière.

De manière avantageuse, lorsqu'un fil de contact approche de sa limite d'usure, le pantographe entre en contact avec le fil de contact et la portion fusible des moyens élastiques. Au bout d'un certain temps, lorsque le fil de contact est usé, la portion fusible des moyens élastiques se rompt du fait des frottements du pantographe. Suite à la rupture mécanique, les moyens élastiques se déforment ce qui modifie l'aspect visuel du dispositif de détection. De manière avantageuse, un unique agent situé au niveau du sol peut déterminer si le fil de contact est usé et nécessite d'être remplacé en observant visuellement le dispositif de détection. Il n'est plus nécessaire de bloquer la voie ferrée ni d'utiliser une plateforme élévatrice pour réaliser une surveillance manuelle.

En outre, grâce à une surveillance manuelle performante, on peut limiter la fréquence des surveillances automatiques qui requièrent la circulation d'engins circulant sur la voie ferrée ce qui procure une économie. L'ensemble du réseau ferroviaire est ainsi surveillé de manière satisfaisante.

De préférence, les moyens élastiques sont configurés pour s'écarter du support de fixation du fait de la tension élastique lors de la rupture de la portion fusible. Ainsi, l'aspect visuel du dispositif de détection est fortement modifié lorsque le fil de contact est usé ce qui facilite l'observation d'une usure par un agent.

De préférence, les moyens élastiques se présentent sous la forme d'au moins une lame élastique. Une telle lame élastique est simple à mettre sous tension élastique par déformation. En outre, suite à la rupture de sa portion fusible, une lame élastique est aisément remplaçable. Une lame élastique possède en outre un coût de fabrication réduit.

De manière préférée, la lame élastique comporte une première extrémité de fixation solidaire du support fixation et une deuxième extrémité libre montée à force sur une partie du support de fixation de manière à ce que la lame élastique soit sous tension élastique. De préférence, la deuxième extrémité libre se présente sous la forme d'un crochet. Ainsi, la lame est contrainte élastiquement pour accrocher le crochet au support de fixation.

De manière préférée, la portion fusible de la lame élastique est située entre sa première extrémité de fixation et sa deuxième extrémité libre. En cas de rupture, la tension élastique de la partie de la lame située entre la portion fusible et la première extrémité de fixation est relâchée ce qui libère la lame élastique qui reprend sa forme libre.

Selon un aspect préféré de l'invention, la portion fusible est formée par pliage de la lame élastique. De préférence encore, la portion fusible est en saillie par rapport au support de fixation. Outre son prix de revient réduit, une fabrication par pliage de la portion fusible permet de régler avec précision sa longueur en saillie pour correspondre avec la limite d'usure du fil de contact.

Selon un aspect préféré de l'invention, le support de fixation comporte deux mâchoires de fixation, de préférence articulées, afin de pouvoir être relié solidairement et de manière stable au fil de contact.

De préférence, des moyens élastiques sont reliés à chaque mâchoire. Ainsi, si l'usure du fil de contact est hétérogène, les moyens élastiques d'une mâchoire peuvent rompre avant les moyens élastiques de l'autre mâchoire. La surveillance du fil de contact est optimale.

Selon un aspect préféré de l'invention, le support de fixation comporte un mécanisme de serrage desdites mâchoires. De préférence, le mécanisme de serrage comporte au moins deux bielles. Un mécanisme de serrage permet d'autoriser le montage d'un dispositif de détection selon l'invention sur un fil de contact d'une caténaire existante. De plus, le mécanisme de serrage permet de multiplier la force de serrage des mâchoires ce qui est avantageux quand le dispositif de détection est monté au moyen d'une perche par un agent au sol.

De manière préférée, le dispositif de détection comporte une perche de montage amovible du support de fixation. Ainsi, un agent situé au sol peut fixer le support de fixation sur un fil de contact au moyen de la perche de montage sans recourir à une plateforme élévatrice.

L'invention concerne également un ensemble d'un fil de contact de caténaire adapté pour entrer en contact avec un pantographe d'un véhicule ferroviaire et d'un dispositif de détection d'usure tel que présenté précédemment dont le support de fixation est relié solidairement au fil de contact et dont la portion fusible des moyens élastiques s'étend à proximité du fil de contact.

Lorsque le dispositif dé détection est monté sur le fil de contact, la portion fusible des moyens élastiques est disposée de manière à pouvoir entrer en contact avec le pantographe lorsque le fil de contact a atteint sa limite d'usure.

De préférence, le fil de contact comportant une limite d'usure, la portion fusible s'étend au niveau de la limite d'usure du fil de contact.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une vue en perspective d'une voie de chemin de fer et sa caténaire ;
- la figure 2 est une vue en perspective d'un fil de contact d'une caténaire ;
- la figure 3 est une vue en coupe d'un fil de contact à l'état neuf ;
- la figure 4 est une vue en coupe d'un fil de contact à l'état usé ;
- la figure 5 est une vue en coupe du dispositif selon l'invention avec une perche de montage lors de sa fixation au fil de contact ;
- la figure 6 est une vue rapprochée du dispositif de la figure 5 ;
- la figure 7 est une vue en éclaté du dispositif de la figure 5 ;
- la figure 8 est une vue en coupe du dispositif de la figure 6 selon un premier plan de coupe lorsque le dispositif est fixé sur le fil de contact ;
- la figure 9 est une vue en coupe du dispositif de la figure 6 selon un deuxième plan de coupe lorsque le dispositif est fixé sur le fil de contact ;
- la figure 10 est une vue de face du dispositif de la figure 5 fixé sur le fil de contact en état de fonctionnement ;
- la figure 11 est une vue de face du dispositif de la figure 5 fixé sur le fil de contact à l'état usé ; et
- la figure 12 est une vue en perspective d'une autre forme de réalisation d'un dispositif fixé sur un fil de contact.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

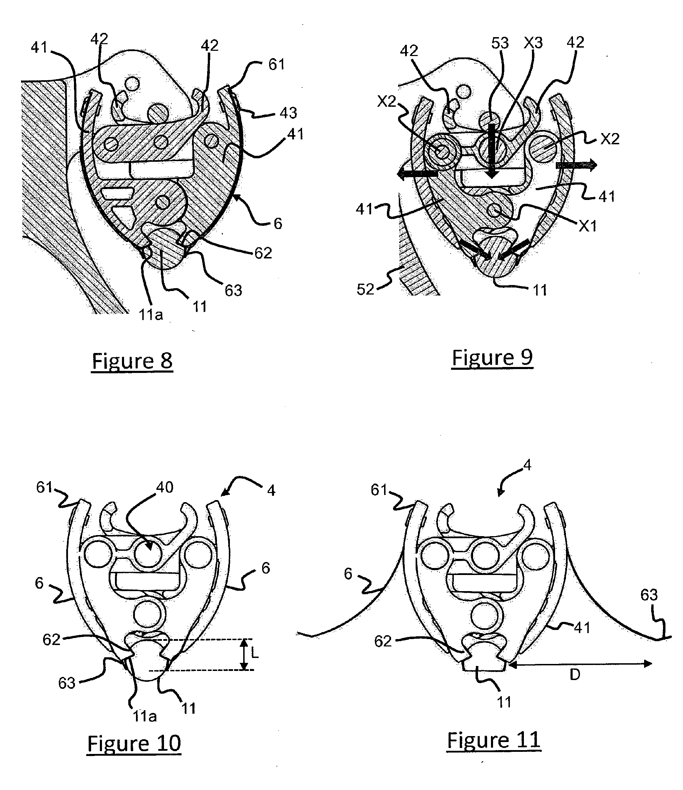

En référence à la figure 10, il est représenté un dispositif de détection d'usure 4 relié à un fil de contact 11 d'une caténaire.

Par la suite, l'invention va être présentée pour un fil de contact 11 se présentant sous la forme d'un élément longitudinal de section circulaire comportant deux rainures latérales et longitudinales de fixation 11a comme illustré aux figures 2 et 3. Dans cet exemple, les rainures 11a sont symétriques et formées dans la partie supérieure du fil de contact 11.

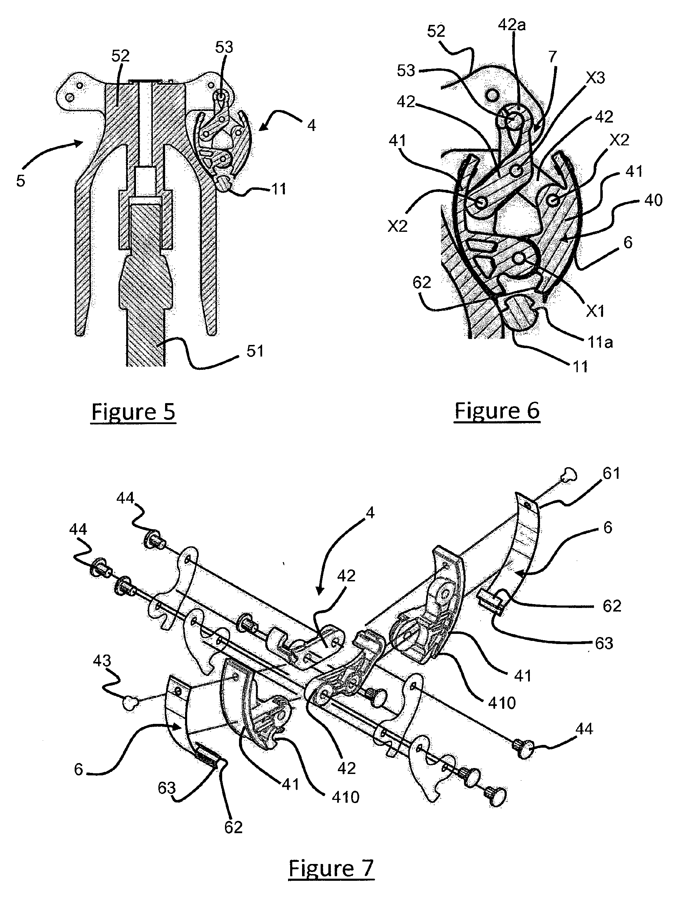

Comme illustré aux figures 5 à 7, le dispositif de détection d'usure 4 comprend un support de fixation 40 adapté pour être relié solidairement au fil de contact 11. Dans cet exemple, le support de fixation 40 comporte deux mâchoires de fixation 41 qui sont articulées autour d'un axe X1. Chaque mâchoire de fixation 41 comporte un bord de contact 410 adapté pour coopérer avec une rainure de fixation 11a du fil de contact 11, de préférence, par complémentarité de formes. Dans cet exemple, la rainure de fixation 11 a et le bord de contact 410 possèdent une section en forme de V.

L'écart entre les bords de contact 410 des mâchoires de fixation 41 est réglable du fait de l'axe d'articulation X1.

Afin de faciliter le serrage et le desserrage des mâchoires de fixation 41, le support de fixation 40 comporte en outre un mécanisme de serrage 7 comportant deux bielles 42 qui sont articulées entre elles autour d'un axe X3 comme illustré à la figure 6. Chaque bielle 42 est en outre articulée à une des mâchoires 41 autour d'un axe X2. Ainsi, toute modification de l'angle formé entre les bielles 42 entraîne une modification de l'écart entre les bords de contact 410 des mâchoires de fixation 41 comme cela sera détaillé par la suite.

Dans cette forme de réalisation, en référence à la figure 6, chaque bielle 42 comporte en outre une extrémité en forme de crochet 42a ou de demi-coquille. Lorsque l'écart entre les bords de contact 410 des mâchoires de fixation 41 est maximal, les extrémités 42a des bielles 42 forment une anse dans laquelle peut s'introduire un pion de préhension 53 afin de déplacer le dispositif de détection 4 comme cela sera détaillé par la suite.

Dans cet exemple, en référence à la figure 7, les axes d'articulation X1, X2, X3 sont formés par des tiges 44 mais il va de soi que d'autres éléments pourraient convenir. Le support de fixation 40 se présente ainsi globalement sous la forme d'une pince de serrage adaptée pour saisir le fil de contact 11 au niveau de ses rainures 11 a.

Selon l'invention, le dispositif de détection d'usure 4 comporte des moyens élastiques 6 reliés au support de fixation 40. Comme cela sera détaillé par la suite, les moyens élastiques 6 sont sous tension élastique, c'est-à-dire, les moyens élastiques 6 sont montés précontraints sur le support de fixation 40.

Dans cette forme de réalisation, en référence plus particulièrement aux figures 7 et 8, une lame métallique 6, ici en laiton, est reliée à chaque mâchoire de fixation 41. Chaque lame métallique 6 comprend une première extrémité 61 fixée solidairement à sa mâchoire 41 et une deuxième extrémité libre 62 fixée à force sur le bord de contact 410 de la mâchoire 41 de manière à ce que la lame métallique 6 soit sous tension élastique.

Dans cet exemple, la première extrémité 61 de la lame métallique 6 est reliée à la mâchoire 41 par un rivet 43 mais il va de soi que d'autres moyens pourraient convenir. De préférence, la deuxième extrémité libre 62 de la lame métallique 6 se présente sous la forme d'un crochet afin d'envelopper le bord de contact 410 de la mâchoire 41 comme illustré aux figures 7 et 8.

Toujours en référence aux figures 7 et 8, la lame métallique 6 comporte une portion fusible 63 formée entre sa première extrémité de fixation 61 et sa deuxième extrémité libre 62. De manière préférée, la portion fusible 63 est formée par pliage de la lame métallique 6 afin de former une partie en saillie par rapport à la mâchoire 41.

Lorsque le dispositif de détection d'usure 4 est monté sur un fil de contact 11, la deuxième extrémité libre 62 de la lame 6 est serrée entre le bord de contact 410 de la mâchoire 41 et la rainure 11a du fil de contact 11 comme illustré à la figure 8. La portion fusible 63 s'étend pour sa part en saillie verticale vers le bas, à proximité du fil de contact 11 comme illustré à la figure 8.

Un procédé de montage du dispositif de détection d'usure 4 sur un fil de contact 11 va être maintenant présenté en référence aux figures 5, 6 et 9.

Dans cet exemple de mise en oeuvre, le dispositif de détection d'usure 4 est monté sur un fil de contact 11 d'une caténaire 10 qui est en service comme illustré à la figure 1.

En référence à la figure 5, le dispositif de détection d'usure 4 est installé par un agent situé au sol au moyen d'une perche de montage 5 comportant un manche 51 terminé à son extrémité supérieure par une coiffe 52. De manière avantageuse, la perche de montage 5 est isolante d'un point de vue électrique. La coiffe 52 comporte un pion de préhension 53 sur lequel est suspendu le dispositif de détection d'usure 4 par son anse formée par les crochets 42a des bielles 42 présentées précédemment. Lors du montage, l'écart entre les bords de contact 410 des mâchoires de fixation 41 est maximal comme illustré à la figure 6.

En référence à la figure 6, l'agent peut avantageusement placer le dispositif de détection d'usure 4 au-dessus du fil de contact 11 puis le descendre afin que les bords de contact 410 des mâchoires de fixation 41 viennent en appui sur les rainures 11a du fil de contact 11.

Pour permettre la fixation du dispositif de détection d'usure 4 au fil de contact 11, l'agent exerce un effort vers le bas sur la perche 5 de manière à ce que le pion de préhension 53 de la coiffe 52 exerce un effort vertical sur les bielles 42 comme illustré à la figure 9. Grâce à l'axe d'articulation X3, les bielles 42 s'écartent ce qui entraîne l'écartement des mâchoires 41 du fait des axes d'articulation X2 et une diminution de l'écart entre les bords de contact 410 des mâchoires de fixation 41 du fait de l'axe d'articulation X1. En bref, lorsque l'agent déplace le manche 51 vers le bas, le support de fixation 40 et le mécanisme de serrage 7 forme une pince de serrage que se referme sur le fil de contact 11 comme illustré à la figure 9.

En position montée, le dispositif de détection d'usure 4 est solidarisé au-dessus du fil de contact 11 ce qui permet à l'agent de dégager le pion de préhension 53 et de retirer la perche 5. Le dispositif de détection d'usure 4 est ainsi monté par un unique agent. De manière préférée, la coiffe 52 comporte plusieurs pions de préhension 53 pour suspendre plusieurs dispositifs de détection 4 afin que l'agent les dispose les uns après les autres en limitant les manipulations de la perche 5. Un tel procédé de montage possède un coût faible par rapport à une surveillance manuelle selon l'art antérieur.

En position montée, en référence à la figure 10, la deuxième extrémité libre 62 de la lame 6 est serrée entre le bord de contact 410 de la mâchoire 41 et la rainure 11a du fil de contact 11. Dans cet exemple, la portion fusible 63 s'étend verticalement vers le bas à proximité du fil de contact 11. La longueur de la portion fusible 63 est adaptée pour que son extrémité inférieure s'étende au niveau de la limite d'usure L déterminée pour le fil de contact 11. Dans cet exemple, la limite d'usure L est de l'ordre de 8.8 mm. La limite d'usure L est déterminée de manière connue de l'homme du métier en fonction des délais de maintenance, de la précision de mesure et de la vitesse d'usure. Il va de soi que la limite d'usure L peut varier d'un fil de contact à un autre.

Le support de fixation 40 possède avantageusement une masse limitée afin de ne pas pénaliser la captation du courant. En outre, du fait de ses dimensions latérales réduites, le support de fixation 40 est apte à permettre le passage d'un engin de surveillance automatique.

Au fur et à mesure du passage de trains sur la voie ferrée, les pantographes frottent contre la partie inférieure du fil de contact 11 lors du captage du courant ce qui diminue son épaisseur, un méplat se formant sur la partie inférieure du fil de contact 11 comme illustré à la figure 11.

Après un certain temps, l'épaisseur du fil de contact 11 est si réduite que la partie inférieure du fil de contact 11 est située au niveau de la portion fusible 63 de la lame métallique 6. Autrement dit, lorsqu'un pantographe circule sur la voie ferrée, celui-ci frotte contre le fil de contact 11 mais également contre la portion fusible 63 de la lame métallique 6 ce qui conduit à sa rupture par usure.

Suite à la rupture de la portion fusible 63, la lame métallique 6 se sépare de son extrémité libre en crochet 62 qui reste piégée entre la rainure 11a du fil de contact 11 et le bord de contact 410 de la mâchoire 41. Autrement dit, la lame métallique 6 est raccourcie, son extrémité libre étant dorénavant formée par la portion fusible rompue 63.

Comme la lame 6 était montée sous tension élastique sur la mâchoire 41 et qu'elle n'est plus retenue à son extrémité inférieure du fait de la rupture de la portion fusible 63, la lame métallique 6 se déforme pour reprendre sa forme libre, c'est-à-dire, sa forme naturelle. Comme illustré à la figure 11, la portion fusible rompue 63 s'écarte de la mâchoire 41 et du fil de contact 11 d'une distance D qui est, dans cet exemple, de l'ordre de 5 cm.

La figure 11 illustre le dispositif de détection d'usure 4 lorsque les portions fusibles 63 des deux lames métalliques 6 se sont rompues ensemble mais il va de soi qu'une unique portion fusible 63 pourrait être rompue.

L'aspect extérieur du dispositif de détection d'usure 4 est fortement modifié du fait de la déformation des lames métalliques 6 ce qui permet à un agent situé au sol d'identifier de manière directe et sans ambiguïté si les portions fusibles 63 sont rompues, c'est-à-dire, si une usure du fil de contact 11 a été détectée par le dispositif 4. De manière avantageuse, l'usure d'un fil de contact 11 est ainsi observable à l'oeil nu depuis le sol.

La longueur de la portion fusible 63 peut avantageusement être réglée pour correspondre au niveau d'usure souhaité du fil de contact 11 ce qui améliore la précision de la surveillance.

De manière avantageuse, cette surveillance visuelle depuis la voie ferrée ne requiert ni de mettre la caténaire hors tension, ni d'arrêter le trafic sur la voie ferrée, ni de monopoliser plusieurs agents avec une plateforme élévatrice. En outre, il est déjà prévu des passages réguliers d'agents au sol pour surveiller les voies ferrées et les équipements. La surveillance de l'usure des fils de contact 11 peut avantageusement être intégrée à cette surveillance périodique ce qui procure un gain de temps et un gain financier. En effet, il n'est alors plus nécessaire de mettre en oeuvre une surveillance spécifique pour les fils de contact 11 comme cela était réalisé dans l'art antérieur pour les zones de la voie ferrée pour lesquelles une surveillance automatique n'était pas possible.

De manière préférée, les moyens élastiques 6 sont couplés à des moyens de communication sans fil (non représentés) qui sont activés lors de la rupture de la portion fusible 63. Les moyens de communication émettent, par exemple par voie radio, un message d'alerte d'usure du fil de contact 11 qui est reçu dans un centre de contrôle afin de prévenir les agents de maintenance.

Lors de l'opération de maintenance de la caténaire 10 pour remplacer le fil de contact usé 11, il suffit de remplacer les lames métalliques rompues 6 du dispositif de détection d'usure 4 pour poursuivre la surveillance.

Il a été présenté précédemment un dispositif de détection d'usure 4 se présentant sous la forme d'un accessoire qui est monté sur un fil de contact 11 d'une caténaire existante 10 mais il va de soi que le dispositif de détection d'usure 4 pourrait également être intégré directement à la structure de la caténaire 10.

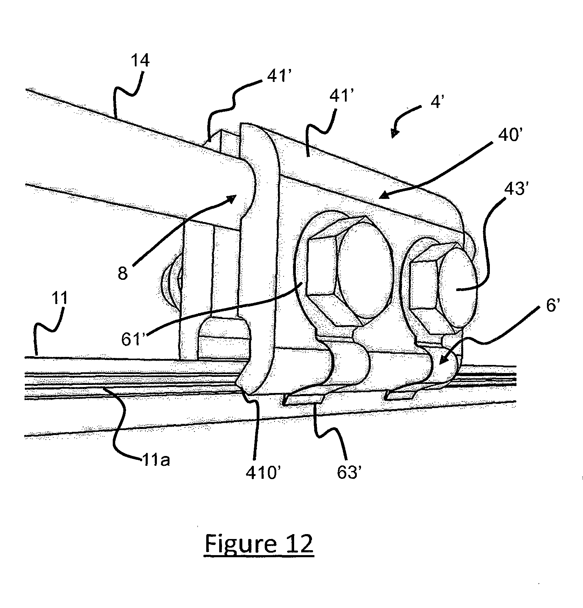

Une deuxième forme de réalisation de l'invention est décrite en référence à la figure 12. Les références utilisées pour décrire les éléments de structure ou fonction identique, équivalente ou similaire à celles des éléments de la figure 7 sont analogues, pour simplifier la description. D'ailleurs, l'ensemble de la description de la forme de réalisation de la figure 7 n'est pas reprise, cette description s'appliquant aux éléments de la figure 12 lorsqu'il n'y a pas d'incompatibilités. Seules les différences notables, structurelles et fonctionnelles, sont décrites.

En référence à la figure 12, le dispositif de détection d'usure 4' se présente sous la forme d'une griffe de fixation comportant un support de fixation 40' formé de deux mâchoires 41' dont les bords de contact 410' sont insérés dans les rainures 11a du fil de contact 11. Le dispositif de détection d'usure 4' comporte en outre plusieurs moyens élastiques 6', ici des lames métalliques, dont une extrémité de liaison 61' est reliée à une mâchoire 41' par un rivet 43' et dont une extrémité libre est montée à force autour du bord de contact 410' de ladite mâchoire 41' de manière à ce que la lame métallique 6' soit montée sous tension élastique, c'est à dire, à l'état contraint entre le bord de contact 410' et la rainure 11a du fil de contact 11. De manière similaire à la première forme de réalisation, la lame métallique 6' comporte une portion fusible 63' qui s'étend au niveau de la limite d'usure du fil de contact 11.

Selon cette deuxième forme de réalisation de l'invention, le support de fixation 40' comporte des moyens de fixation 8 à un câble porteur auxiliaire 14 de caténaire 10. La caténaire 10 comporte, dans cet exemple, un câble porteur principal (non représenté) relié par l'intermédiaire d'une succession de pendules (non représentés) au câble porteur auxiliaire 14 lui-même relié au fil de contact 11 par un dispositif de détection d'usure 4'. Dans cet exemple de réalisation, le câble porteur auxiliaire 14 est un câble d'alimentation électrique du fil de contact 11.

Dans cet exemple, chaque mâchoire 41' comporte une empreinte adaptée pour coopérer avec la surface extérieure du câble porteur 13. Les mâchoires 41' sont serrées autour du câble porteur auxiliaire 14 par des rivets 43' pour former une bride de fixation. De manière avantageuse, le dispositif 4' remplit une première fonction de liaison en rendant solidaire le câble porteur auxiliaire 14 du fil de contact 11 et une deuxième fonction de détection d'usure. La détection d'usure du fil de contact 11 est ainsi intégrée à la caténaire 10 ce qui est avantageux.

De manière préférée, un dispositif de détection d'usure est placé au niveau des zones les plus susceptibles de se rompre d'un fil de contact 11 :
- zone sur laquelle est monté un élément de masse non négligeable (Bras de rappel du système de maintien, etc.) ;
- zone sur laquelle sont réalisées des connexions d'alimentation et de répartition électriques ; et
- zone de raccord/jonction de deux fils de contact, en particulier, lors de l'utilisation d'une griffe de jonction ou de renfort.

## Revendications

1. Dispositif (4, 4') de détection d'usure d'un fil de contact (11) d'une caténaire disposée au-dessus d'une voie ferrée, le fil de contact (11) étant adapté pour entrer en contact avec un pantographe d'un véhicule ferroviaire circulant sur ladite voie ferrée, le dispositif de détection (4, 4') comprenant un support de fixation (40, 40') adapté pour être relié solidairement au fil de contact (11) et des moyens élastiques (6, 6') reliés au support de fixation (40, 40') sous tension élastique, les moyens élastiques (6, 6') comprenant une portion fusible (63, 63') configurée pour se rompre en cas d'usure du fil de contact (11), les moyens élastiques (6, 6') étant configurés pour se déformer du fait de la tension élastique lors de la rupture de la portion fusible (63, 63').

2. Dispositif selon la revendication 1, dans lequel les moyens élastiques se présentent sous la forme d'au moins une lame élastique (6, 6').

3. Dispositif selon la revendication 2, dans lequel la lame élastique (6, 6') comporte une première extrémité de fixation (61, 61') solidaire du support fixation (40, 40') et une deuxième extrémité libre (62, 62') montée à force sur une partie du support de fixation (40, 40') de manière à ce que la lame élastique (6, 6') soit sous tension élastique.

4. Dispositif selon la revendication 3, dans lequel la deuxième extrémité libre (62, 62') se présente sous la forme d'un crochet.

5. Dispositif selon l'une des revendications 3 à 4, dans lequel la portion fusible (63, 63') de la lame élastique (6, 6') est située entre sa première extrémité de fixation (61, 61') et sa deuxième extrémité libre (62, 62').

6. Dispositif selon l'une des revendications 1 à 5, dans lequel la portion fusible (63, 63') est en saillie par rapport au support de fixation (40, 40').

7. Dispositif selon l'une des revendications 1 à 6, dans lequel le support de fixation (40, 40') comporte deux mâchoires de fixation (41, 41'), de préférence, articulées.

8. Dispositif selon la revendication 7, dans lequel des moyens élastiques (6, 6') sont reliés à chaque mâchoire (41, 41').

9. Ensemble d'un fil de contact de caténaire (11) adapté pour entrer en contact avec un pantographe d'un véhicule ferroviaire et d'un dispositif de détection d'usure (4, 4') selon l'une des revendications précédentes dont le support de fixation (40, 40') est relié solidairement au fil de contact (11) et dont la portion fusible (63, 63') des moyens élastiques (6, 6') s'étend à proximité du fil de contact (11).

10. Ensemble selon la revendication précédente, dans lequel, le fil de contact (11) comportant une limite d'usure (L), la portion fusible (63, 63') s'étend au niveau de la limite d'usure (L) du fil de contact (11).

## Patentansprüche

1. Vorrichtung (4, 4') zur Erfassung von Verschleiß eines Kontaktdrahtes (11) einer Oberleitung, die über einem Schienenstrang angeordnet ist, wobei der Kontaktdraht (11) dazu vorgesehen ist, mit einem Pantographen eines Schienenfahrzeugs in Kontakt zu kommen, das auf dem Schienenstrang fährt, wobei die Erfassungsvorrichtung (4, 4') eine Befestigungsstütze (40, 40'), die dazu vorgesehen ist, fest mit dem Kontaktdraht (11) verbunden zu werden, und elastische Mittel (6, 6') umfasst, die mit der Befestigungsstütze (40, 40') unter elastischer Spannung verbunden sind, wobei die elastischen Mittel (6, 6') einen Sicherungsabschnitt (63, 63') umfassen, der dazu vorgesehen ist, im Falle von Verschleiß des Kontaktdrahtes (11) zu brechen, wobei die elastischen Mittel (6, 6') derart ausgeführt sind, dass sie sich auf Grund der elastischen Spannung beim Bruch des Sicherungsabschnittes (63, 63') verformen.

2. Vorrichtung nach Anspruch 1, bei der die elastischen Mittel in Form von mindestens einer elastischen Lamelle (6, 6') vorhanden sind.

3. Vorrichtung nach Anspruch 2, bei der die elastische Lamelle (6, 6') ein erstes Befestigungsende (61, 61'), das mit der Befestigungsstütze (40, 40') verbunden ist, und ein zweites freies Ende (62, 62') umfasst, das fest auf einem Teil der Befestigungsstütze (40, 40') montiert ist, so dass die elastische Lamelle (6, 6') unter elastischer Spannung ist.

4. Vorrichtung nach Anspruch 3, bei der das zweite freie Ende (62, 62') in Form eines Hakens vorhanden ist.

5. Vorrichtung nach einem der Ansprüche 3 bis 4, bei der der Sicherungsabschnitt (63, 63') der elastischen Lamelle (6, 6') zwischen ihrem ersten Befestigungsende (61, 61') und ihrem zweiten freien Ende (62, 62') angeordnet ist.

6. Vorrichtung nach einem der Ansprüche 1 bis 5, bei der der Sicherungsabschnitt (63, 63') in Bezug zur Befestigungsstütze (40, 40') vorspringend ist.

7. Vorrichtung nach einem der Ansprüche 1 bis 6, bei der die Befestigungsstütze (40, 40') zwei Befestigungsbacken (41, 41') umfasst, die vorzugsweise gelenkig sind.

8. Vorrichtung nach Anspruch 7, bei der die elastischen Mittel (6, 6') mit jeder Befestigungsbacke (41, 41') verbunden sind.

9. Einheit eines Oberleitungskontaktdrahtes (11), der dazu vorgesehen ist, mit einem Pantographen eines Schienenfahrzeugs in Kontakt zu kommen, und einer Vorrichtung zur Erfassung von Verschleiß (4, 4') nach einem der vorhergehenden Ansprüche, deren Befestigungsstütze (40, 40') fest mit dem Kontaktdraht (11) verbunden ist, und deren Sicherungsabschnitt (63, 63') der elastischen Mittel (6, 6') sich in der Nähe des Kontaktdrahtes (11) erstreckt.

10. Einheit nach dem vorhergehenden Anspruch, bei der, wobei der Kontaktdraht (11) eine Verschleißgrenze (L) umfasst, sich der Sicherungsabschnitt (63, 63') im Bereich der Verschleißgrenze (L) des Kontaktdrahtes (11) erstreckt.

## Claims

1. Device (4, 4') for detecting wear of a contact wire (11) of a catenary arranged above a railway track, the contact wire (11) being capable of coming into contact with a pantograph of a railway vehicle travelling on said railway track, the detection device (4, 4') comprising a fixing support (40, 40') capable of being rigidly connected to the contact wire (11), and resilient means (6, 6') connected to the fixing support (40, 40') under resilient tension, the resilient means (6, 6') comprising a fusible portion (63, 63') designed to break in the event of wear of the contact wire (11), the resilient means (6, 6') being designed so as to deform due to the resilient tension when the fusible portion (63, 63') breaks.

2. Device according to claim 1, wherein the resilient means are in the form of at least one resilient strip (6, 6').

3. Device according to claim 2, wherein the resilient strip (6, 6') comprises a first fixing end (61, 61') which is rigidly connected to the fixing support (40, 40') and a second free end (62, 62') which is force-mounted on a part of the fixing support (40, 40') such that the resilient strip (6, 6') is under resilient tension.

4. Device according to claim 3, wherein the second free end (62, 62') is in the form of a hook.

5. Device according to either claim 3 or claim 4, wherein the fusible portion (63, 63') of the resilient strip (6, 6') is located between the first fixing end (61, 61') thereof and the second free end (62, 62') thereof.

6. Device according to any of claims 1 to 5, wherein the fusible portion (63, 63') projects relative to the fixing support (40, 40').

7. Device according to any of claims 1 to 6, wherein the fixing support (40, 40') comprises two fixing jaws (41, 41'), preferably articulated jaws.

8. Device according to claim 7, wherein the resilient means (6, 6') are connected to each jaw (41, 41').

9. Assembly of a catenary contact wire (11) capable of coming into contact with a pantograph of a railway vehicle, and of a wear detection device (4, 4') according to any of the preceding claims, of which the fixing support (40, 40') is rigidly connected to the contact wire (11) and of which the fusible portion (63, 63') of the resilient means (6, 6') extends close to the contact wire (11).

10. Assembly according to the preceding claim, wherein, since the contact wire (11) comprises a wear limit (L), the fusible portion (63, 63') extends in the region of the wear limit (L) of the contact wire (11).
